(19) Europäisches Patentamt
European Patent Office
Office européen des brevets

(11) Veröffentlichungsnummer: **0 321 784 B1**

(12) # EUROPÄISCHE PATENTSCHRIFT

(45) Veröffentlichungstag der Patentschrift: **18.03.92**

(51) Int. Cl.$^5$: **C09B 62/018**, D06P 1/38

(21) Anmeldenummer: **88120446.5**

(22) Anmeldetag: **07.12.88**

(54) **Schwermetallhaltige Formazanfarbstoffe, Verfahren zu ihrer Herstellung und ihre Verwendung zum Färben und Bedrucken von Fasermaterialien.**

(30) Priorität: **19.12.87 DE 3743236**

(43) Veröffentlichungstag der Anmeldung:
**28.06.89 Patentblatt 89/26**

(45) Bekanntmachung des Hinweises auf die Patenterteilung:
**18.03.92 Patentblatt 92/12**

(84) Benannte Vertragsstaaten:
**CH DE FR GB LI**

(56) Entgegenhaltungen:
**EP-A- 0 074 928**
**EP-A- 0 159 292**
**FR-A- 2 197 946**
**FR-A- 2 270 304**
**FR-A- 2 295 090**

(73) Patentinhaber: **BAYER AG**

**W-5090 Leverkusen 1 Bayerwerk(DE)**

(72) Erfinder: **Köcher, Jürgen, Dr.**
**Rybniker Strasse 12**
**W-5000 Köln 80(DE)**
Erfinder: **Jäger, Horst, Dr.**
**Carl-Rumpff-Strasse 37**
**W-5090 Leverkusen 1(DE)**

**EP 0 321 784 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der Fr-A-2 197 946 sind bereits Formazanfarbstoffe bekannt. Die Vorliegende Erfindung betrifft neue, schwermetallhaltige Formazanfarbstoffe der allgemeinen Formel

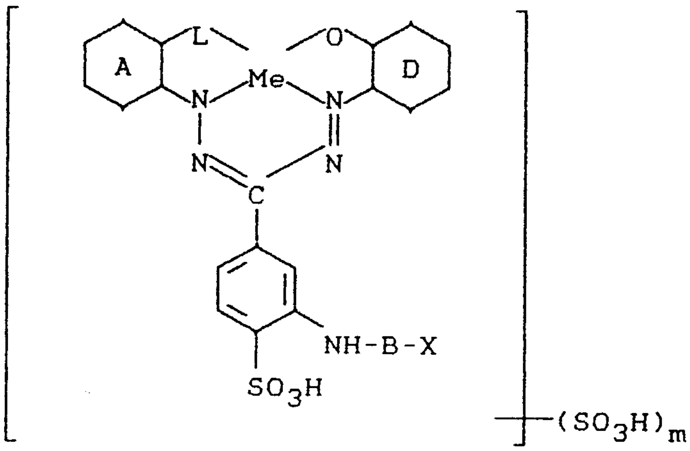

(1)

worin
- A gegebenenfalls substituiertes Phenylen
- D gegebenenfalls substituiertes Phenylen oder Naphthylen
- L Sauerstoff oder die Carboxylgruppe, wobei sich Substituent L in ortho-Stellung zum Substituenten N befindet,
- B direkte Bindung oder ein zweiwertiges Brückenglied
- X Rest einer Reaktivkomponente
- Me Kupfer oder Nickel und
- m 1 bis 4 bedeuten.

Beispiele für Substituenten von A sind:
$SO_3H$, COOH, Alkyl ($C_1$-$C_5$), Halogen, Nitro, Alkoxy ($C_1$-$C_4$), Amino, Acetylamino ($C_1$-$C_5$), mit dem Rest einer Reaktivkomponente X substituiertes Amino, Alkylsulfonyl ($C_1$-$C_4$), Phenylsulfonyl, Sulfamoyl, N-Mono- und N,N-Dialkylsulfamoyl mit jeweils 1 bis 4 C-Atomen im Alkylteil.

Für D = substituiertes Phenylen oder D = substituiertes Naphthylen kommen als Substituenten beispielsweise in Frage:
$SO_3H$, COOH, $NO_2$, Halogen, Alkyl ($C_1$-$C_5$), Amino, Acetylamino ($C_1$-$C_5$), mit dem Rest einer Reaktivkomponente X substituiertes Amino, Alkoxy ($C_1$-$C_4$), Carbalkoxy ($C_1$-$C_4$), $SO_2CH_2CH_2OSO_3H$, $SO_2CH = CH_2$.

Als Brückenglieder B seien vorzugsweise die folgenden genannt:

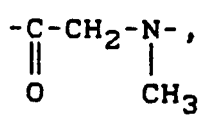

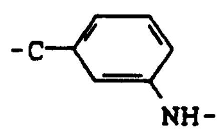

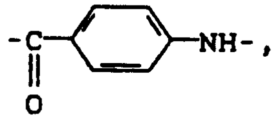

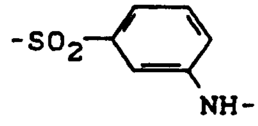

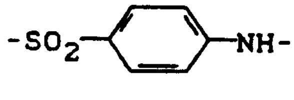

Das Symbol Me steht vorzugsweise für Kupfer.

Geeignete faserreaktive Feste, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-($N_3$), Rhodanido, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seinen folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4′-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-amino-4-fluor-triazinyl-6, 2-(3′,6′,8′-Trisulfonaphthyl-(2′))-amino-4-fluor-triazinyl-6, 2-(3′,6′-Disulfonaphthyl-(1′))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)-mercapto-4-fluortriazinyl-6, 2-(2′,4′-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

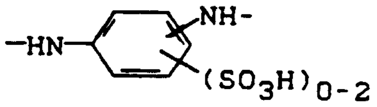 , 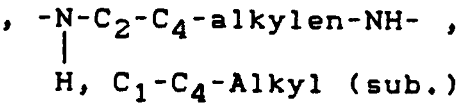 ,

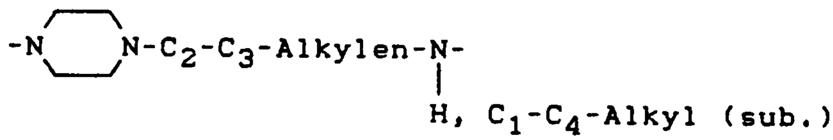

oder im Falle der Sulfatoethylsulfonyl- bzw. Vinylsulfonylgruppe über ein Brückenglied

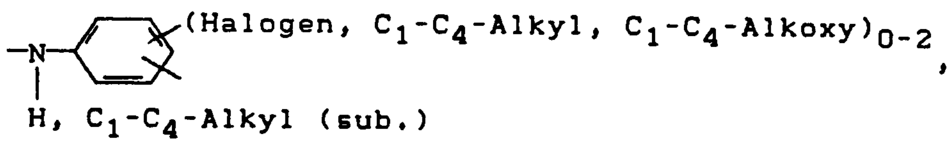

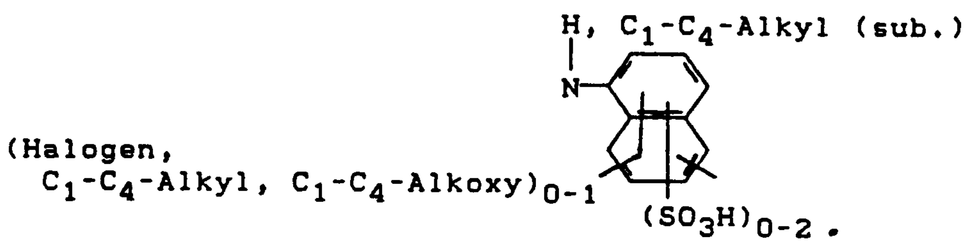

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, $\beta$-(4′,5′-Dichlorpyridazon-6′-yl-1′)-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4-und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, $\beta$-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, $\beta$-(2,2,3,3-Tetrafluorcyclobutyl-1)-acryloyl-, $\alpha$- oder $\beta$-Bromacryloyl-, $\alpha$- oder $\beta$-Alkyl- oder -Arylsulfonylacryloyl-Gruppe, wie $\alpha$- oder $\beta$-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, Cl, Br, F, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$, $-OSO_2CH_3$, -SCN, $-NH-SO_2CH_3$, $-OSO_2-C_6H_4-CH_3$, $-OSO_2-C_6H_5$, -OCN,

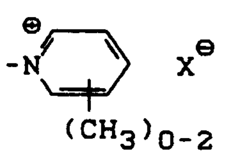

oder

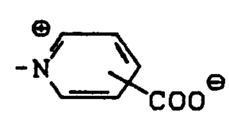

mit

X Anion, bspw. $-OSO_3H$, $-SSO_3H$, $-OPO_3H_2$, -Cl, -Br, -F -SCN, -OCN, $-OSO_2CH_3$, $-OSO_2C_6H_5$, $OCOCH_3$, -J, $-OSO_2OCH_3$, $-OSO_2C_6H_4CH_3$, $-OCOC_6H_5$,

Im Rahmen der Formel (1) sind Farbstoffe der Formel (1a) bevorzugt

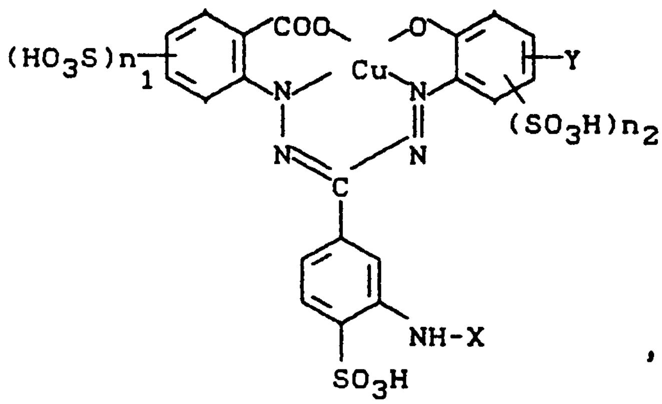

,

worin

n$_1$, n$_2$ 0 oder 1 oder 2,

Y Halogen, Nitro, Alkoxy ($C_1$-$C_4$), Alkyl ($C_1$-$C_4$),

X ein Monohalogentriazin- oder ein Dichlortriazin-Rest bedeutet.

Besonders bevorzugt sind Farbstoffe der Formel

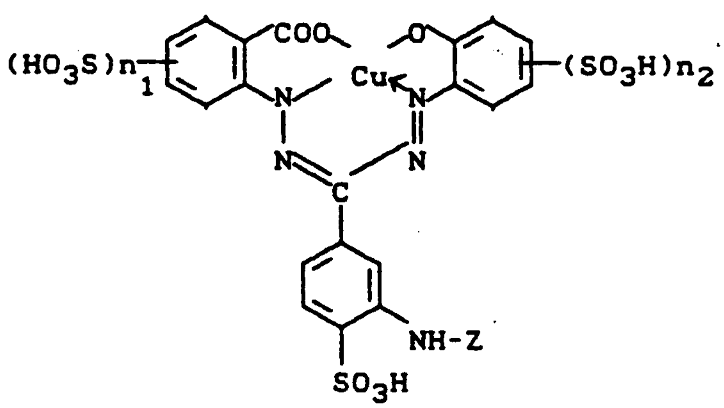

(2)

wobei

n$_1$, n$_2$ entweder 0 oder 1 ist und

Z ein Triazinylrest der Formel (3)

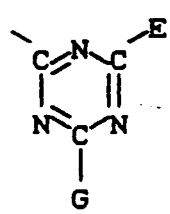

(3)

worin

G für Chlor oder Fluor steht,

E für Chlor, oder einen nicht mit Cellulose reaktiven Rest wie gegebenenfalls substituierte Aminogruppe steht.

Weitere bevorzugte Farbstoffe sind Farbstoffe der Formel (4)

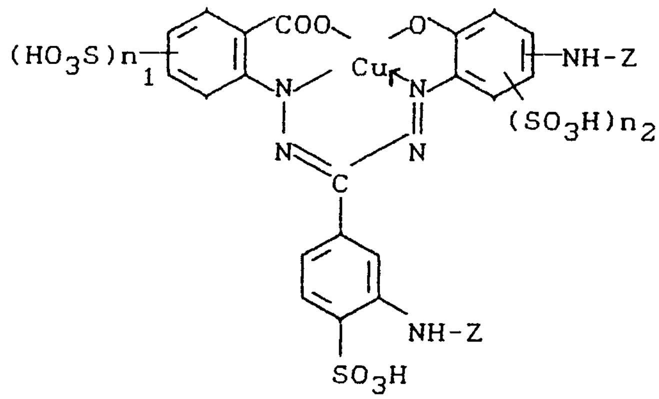

(4)

und der Formel (5)

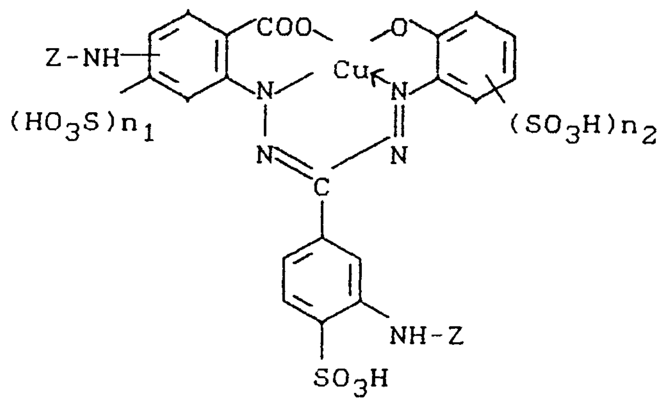

(5)

wobei
$n_1$, $n_2$, Z die obengenannten Bedeutungen besitzen.

Gegenstand der Erfindung ist weiterhin ein Verfahren zur Herstellung von Farbstoffen, dadurch gekennzeichnet, daß man Verbindungen der Formel

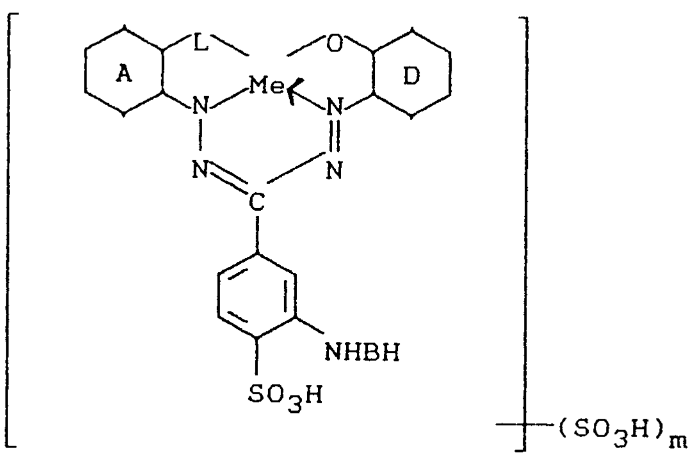

mit einer Reaktivkomponente und gegebenenfalls einem Amin umsetzt, insbesondere ein Verfahren zur Herstellung der Reaktivfarbstoffe der Formel (1), das dadurch gekennzeichnet ist, daß man 1 Mol eines Formazanfarbstoffes der Formel

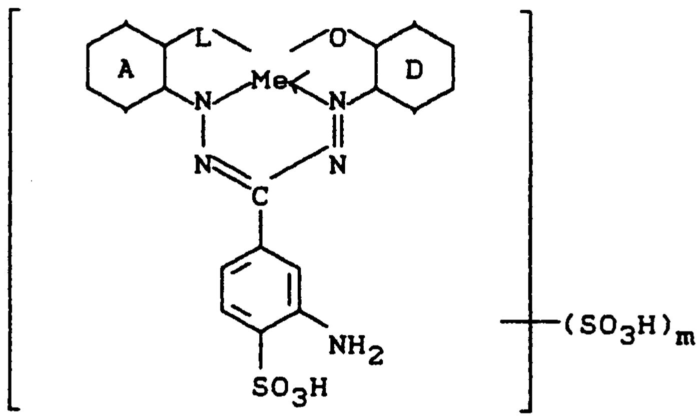

(6)

mit 1 Mol einer Reaktivkomponente der Formel

U - X (7)

worin X einen als Anion abspaltbaren Substituenten (vorzugsweise Halogen) darstellt, unter Abspaltung von X - H kondensiert. Gegebenenfalls kann auch mit 2 Mol der Reaktivkomponente kondensiert werden, wenn als Substituent von A oder D noch eine acylierbare Aminogruppe vorhanden ist.

Diese Acylierung wird im allgemeinen in Wasser bei Temperaturen von 0 °C bis 80 °C - je nach Reaktivität von (7) - und im schwach alkalischen, neutralen bis schwach saurem Medium durchgeführt.

Geeignete Reaktivkomponenten der Formel (7) sind beispielsweise die Halogenide, insbesondere die Chloride der genannten Komponenten U - X. Aus der großen Zahl der zur Verfügung stehenden Verbindungen seien hier auszugsweise erwähnt:

Trihalogen-symmetrische-triazine, wie Cyanurchlorid und Cyanurbromid, Dihalogen-monoamino- und -monosubstituierte Amino-symmetrische Triazine, wie 2,6-Dichlor-4-aminotriazin, 2,6-Dichlor-4-methylaminotriazin, 2,6-Dichlor-4-ethylaminotriazin, 2,6-Dichlor-4-oxhethylaminotriazin, 2,6-Dichlor-4-phenylaminotriazin, 2,6-Dichlor-4-(o-, m-oder p-sulfophenyl)-aminotriazin, 2,6-Dichlor-4-(2′,3′-2′,4′-, 3′,4′- oder -2′,5′-disulfophenyl)-aminotriazin, Dihalogen-alkoxy- und -aryloxy-symmetrische Triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxytriazin, Dihalogen-alkylmercapto- und -arylmercapto symmetrische Triazine, wie 2,6-Dichlor-4-ethylmercaptotriazin, 2,6-Dichlor-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-aminotriazin, 2,4-Difluor-6-(o-, m-, p-sulfophenyl)-amino-triazin, 2,4-Difluor-6-methoxytriazin, 2,4-Difluor-6-(2′,5′-disulfophenyl)-aminotriazin, 2,4-Difluor-6-(6′-sulfonaphthyl-2′)-aminotriazin,2,4-Difluor-6-(o-, m-, p-ethylphenyl)-aminotriazin, 2,4-Difluor-6-(o-, m-, p-chlorphenyl)-aminotriazin, 2,4-Difluor-6-(o-, m-, p-methoxyphenyl)-aminotriazin, 2,4-Difluor-6-(2′-methyl-5′-sulfophenyl)-aminotriazin, 2,4-Difluor-6-(2′-methyl-4′-sulfophenyl)-aminotriazin, 2,4-Difluor-6-(2′-chlor-4′-sulfophenyl)-aminotriazin, 2,4-Difluor-6-(2′-methoxy-4′-sulfophenyl)-aminotriazin, 2,4-Difluor-6-(o-, m-, p-carboxyphenyl)-aminotriazin, 2,4-Difluor-6-(N-methylphenyl)-aminotriazin, 2,4-Difluor-6-(N-ethylphenyl)-aminotriazin, 2,4-Difluor-6-(N-isopropylphenyl)-aminotriazin, 2,4-Difluor-6-cyclohexylaminotriazin, 2,4-Difluor-6-morpholinotriazin, 2,4-Difluor-6-piperidinotriazin, 2,4-Difluor-6-benzylaminotriazin, 2,4-Difluor-6-N-methyl-benzylaminotriazin, 2,4-Difluor-6-β-phenylethylaminotriazin, 2,4-Difluor-6-(X-sulfobenzyl)-aminotriazin, 2,4-Difluor-6-(2′,4′-disulfophenyl)-aminotriazin, 2,4-Difluor-6-(2′,5′-disulfophenyl)-aminotriazin, 2,4-Difluor-6-(2′-carboxy-4′-sulfophenyl)-aminotriazin, 2,4-Difluor-6-(2′,5′-disulfo-4-methoxyphenyl) -aminotriazin, 2,4-Difluor-(2′-methyl-4′,6′-disulfophenyl)-aminotriazin, 2,4-Difluor-(6′,8′-disulfonaphthyl-(2′)-aminotriazin, 2,4-Difluor-(4′,8′-disulfonaphthyl-(2′))-aminotriazin, 2,4-Difluor-(4′,6′,8′-trisulfonaphthyl-(2′))-aminotriazin, 2,4-Difluor-(3′,6′,8′-trisulfonaphthyl-(2′))-aminotriazin, 2,4-Difluor-(3′,6′-disulfonaphthyl-(1′))-aminotriazin, 2,4-Difluor-6-aminotriazin, 2,4-Difluor-6-methylaminotriazin, 2,4-Difluor-6-ethylaminotriazin, 2,4-Difluor-6-methoxyethoxytriazin, 2,4-Difluor-6-methoxy-ethylaminotriazin, 2,4-Difluor-6-dimethylaminotriazin, 2,4-Difluor-6-diethylaminotriazin, 2,4-Difluor-6-isopropylaminotriazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder Trifluor-pyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy-oder -5-carboethoxy- oder -5-carboxymethyl- oder -5-mono-, -di- oder -trichlormethyl- oder -5-carboxy- oder -5-sulfo- oder -5-cyano- oder -5-vinyl-pyrimidin, 2,4-Difluor-6-methylpyrimidin, 2,6-Difluor-4-methyl-5-chlorpyrimidin, 2,4-Difluorpyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor-oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trichlor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitropyrimidin, 2,4-Difluor-5-trifluormethylpyrimidin, 2,4-Difluor-5-methylsulfonyl-pyrimidin, 2,4-Difluor-5-phenylpyrimidin, 2,4-Difluor-5-phenylpyrimidin, 2,4-Difluor-5-carbonamidopyrimidin, 2,4-Difluor-5-carbomethylpyrimidin, 2,4-Difluor-6-trifluormethylpyrimidin, 2,4-Difluor-6-carbonamidopyrimidin, 2,4-Difluor-6-carbomethoxypyrimidin, 2,4-Difluor-6-phenylpyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4,-difluorpyrimidin, 4,6-Difluor-5-chlorpyrimidin, 4,6-Difluor-5-trifluormethyl-pyrimidin, 4,6-Difluor-2-methyl-pyrimidin, 4,6-Difluor-6-chlor-2-methylpyrimidin, 4,5,6-Trifluorpyrimidin, 4,6-Difluor-6-chlor-2-trifluormethylpyrimidin, 4,6-Difluor-2-phenylpyrimidin, 4,6-Difluor-5-cyan-pyrimidin, 4,6-Difluor-5-nitropyrimidin, 4,6-Difluor-5-methylsulfonylpyrimidin, 4,6-Difluor-5-phenylsulfonylpyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidin-Reaktivkomponenten mit abspaltbaren Sulfonylgruppen, wie 2-Carboxymethylsulfonyl-4-chlorpyrimidin,2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimidin, 2,4,6-Trismethylsulfonylpyrimidin, 2,6-Bis-methylsulfonyl-4,6-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5,-dichlor-6-chlormethylpyrimidin, 2-Methylsulfonyl-4-chlor-6-methylpyrimidin-5-sulfonsäurechlorid, 2-Methylsulfonyl-5-chlor-5-nitro-6-methylpyrimidin, 2,4,5,6-Tetramethylsulfonylpyrimidin, 2-Methylsulfonyl-4-chlor-5,6-dimethylpyrimidin, 2-Ethylsulfonyl-4,6-dichlor-6-methylpyrimidin, 2-Methylsulfonyl-4,6-dichlorpyrimidin, 2,4,6-Tris-methylsulfonyl-5-chlorpyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlorpyrimidin, -5-carbonsäure, 2-Methylsulfonyl-4-chlor-5-cyan-methoxypyrimidin, 2-Methylsulfonyl-4,5-dichlorpyrimidin, 4,6-Bis-methylsulfonylpyrimidin, 4-Methylsulfonyl-6-chlorpyrimidin, 2-Sulfoethylsulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlorpyrimidin, 2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2′- oder 3′- oder 4′-Carboxyphenylsulfonyl)-4,5-dichlor-6-methylpyrimidin, 2,4-Bis-(2′-oder 3′- oder 4′-Carboxyphenylsulfonyl)-5-chlor-6-methylpyrimidin, 2-Methylsulfonyl-6-chlorpyrimidin-4-oder -5-carbonsäurechlorid, 2-Ethylsulfonyl-6-chlorpyrimidin-4-oder -5-carbonsäurechlorid, 2,6-Bis-(methylsulfonyl)-pyrimidin-4- carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid; weitere Reaktivkomponente der heterocyclischen Reihe mit reaktiven Sulfonylsubstituenten sind beispielsweise 3, 6-Bis-phenylsulfonylpyridazin, 3-Methylsulfonyl-6-chloridazin, 3,6-Bis-trichlormethylsulfonylpyridazin, 3,6-Bis-methylsulfonyl-4-methylpyridazin, 2,5,6-Tris-methylsulfonylpyridazin, 2,4-Bis-methylsulfonyl-1,3,5-triazin, 2,4-Bis-methylsulfonyl-6-(3′-sulfonylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Tris-phenylsulfonyl-1,3,5-triazin; 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4′-Chlorcarbonylphenyl) oder 2′-chlorcarbonylethyl)-4,5-bis-methylsulfonylpyridazon-(6);weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 2,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4′-, 5′-Dichlorpyridazin-6′-yl-1′)-phenylsulfonsäurechlorid oder -carbonsäurechlorid sowie die entsprechenden Bromverbindungen, β-(4′,5′-Dichlorpyridazin-3′-yl)-ethylcarbonsäurechlorid, 2-Chlorchinoxalin-3-carbonsäurechlorid und die entsprechende Bromverbindung, N-Methyl-N-(2,4-dichlortriazin-6)-carbamidsäurechlorid, N-methyl-N-(2-chlor-4-methylaminotriazinyl-6)-carbamidsäurechlorid, N-Methyl-N-(2-chlor-4-dimethylaminotriazinyl-6)-carbamidsäurechlorid, N-Methyl- oder N-Ethyl-N-(2,4-dichlortriazinyl-(6)-aminoacetylchlorid, N-Methyl-, N-Ethyl- oder N-Hydroxyethyl-N-(2,3-dichlorchinoxalin-6-sulfonyl)- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl-oder 2-Alkylsulfonyl-benzthiazol-5- oder -6-carbonsäurechlorid oder -5- oder -6-sulfonsäurechlorid, wie 2-Methylsulfonyl- oder 2-Ethylsulfonyl- oder 2-Phenylsulfonyl-benzthiazol-5- oder -6-sulfonsäurechlorid oder -5-oder -6-carbonsäurechlorid sowie die entsprechenden in ankondensierten Benzolring Sulfonsäuregruppen enthaltenden 2-Sulfonylbenzthiazol-Derivate, 3,5-Bis-methylsulfonyl-isothiazol-4-carbonsäurechlorid 2-Chlor-benzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5-oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4-oder -5-sulfonsäurechlorid und die entsprechenden Bromderivate. Weiterhin seinen genannt: 5-Chlor-2,4,6-trifluor-isophthalonitril, 2,4,6-Trifluor-1,3,5-tricyanobenzol, 2,4,5,6-Tetrafluorisophthalonitril, 2,4,6-Trichlor-5-methylsulfonyl-pyrimidin,2,4,6-Trichlor-5-ethylsulfonylpyrimidin, 2,4-Difluor-5-methylsulfonyl-6-(2′-sulfophenylamino)-pyrimidin.

Aus der Reihe der aliphatischen Reaktivkomponenten sind beispielsweise zu erwähnen:
Acrylsäurechlorid, Mono-, Di- oder Trichlor-acrylsäurechlorid, 3-Chlorpropionsäurechlorid, 3-Phenylsulfonylpropionsäurechlorid, 2-Methylsulfonylpropionsäurechlorid, 3-Ethylsulfonylpropionsäurechlorid, 3-Chlorethansulfochlorid, Chlormethansulfochlorid, 2-Chloracetylchlorid, 2,2,3,3-Tetrafluorcyclobutan-1-carbonsäurechlorid, β-(2,2,3,3-Tetrafluorcyclobutyl-1)-acrylsäurechlorid, 2,3,3-Trifluor-2-chlorcyclobutan-1)-carbonsäurechlorid, β-Methyl-sulfonyl-acrylsäurechlorid und β-Bromacrylsäurechlorid.

Bei der Herstellung der bevorzugten Farbstoffe der Formel (2) ergibt sich eine weitere Variante dadurch, daß man den entsprechenden Farbstoff der Formel (8)

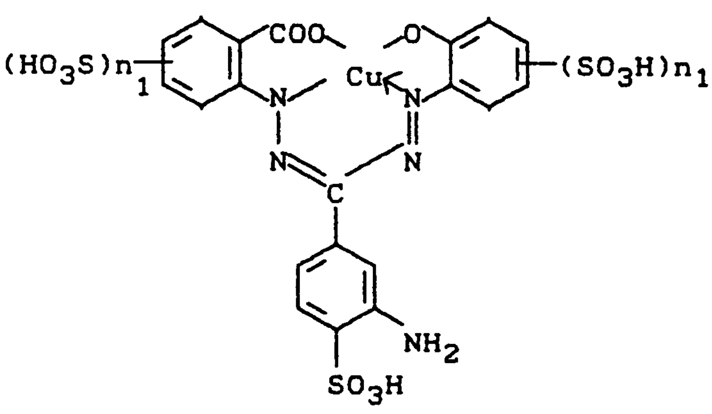

(8)

wobei
$n_1$, $n_2$ entweder 0 oder 1 ist,
mit einem Triazin der Formel

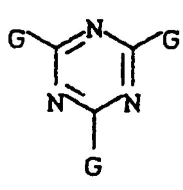

(9)

und mit einem Amin der Formel

H - E (10)

in beliebiger Reihenfolge kondensieren kann.

Beispiele für Triazine der Formel (9), die bei der Herstellung der bevorzugten Farbstoffe der Formel (2)

verwendet werden, sind 2,4,6-Trichlortriazin und 2,4,6-Trifluortriazin.

Als Amine der Formel (10), die als Ausgangsstoffe zur Herstellung der faserreaktiven Farbstoffe der Formel (2) verwendet werden können, seien beispielsweise die folgenden genannt:
Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminethansulfonsäure, $\beta$-Sulfatoethylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminanilin, o-, m- und p-Nitroanilin, o-, m- und p-Aminophenyl, 2-Methyl-4-nitroanilin, 2-Methyl-5-nitroanilin, 2,5-Dimethoxyanilin, 3-Methyl-4-nitroanilin, N-Nitro-4-methylanilin, 3-Nitro-4-methylanilin, o-, m- und p-Anisidin, o-, m- und p-Phenetidin, 2-Methoxy-5-methylanilin, 2-Ethoxy-5-methoxyanilin, 4-Bromanilin, 4-Aminophenylsulfamid, 3-Trifluormethylanilin, 3- und 4-Aminophenylharnstoff, 1-Naphthylamin, 2-Naphthylamin, 2-Naphthylamin, 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin Orthanilsäure, Metanilsäure, Sulfanilsäure, Anilin-2,4-disulfonsäure, Anilin-2,5-disulfonsäure, Anilin-3,5-disulfonsäure, Anthranilsäure, m-und p-Aminobenzoesäure, 4-Aminophenylmethansulfonsäure, 2-Aminotoluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Napthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, 4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyrimidin, 2-Aminobenzthiazol, 5-, 6- und 8-Aminochinolin, 2-Aminopyrimidin, Morpholin, Piperidin und Piperazin. N-$\beta$-Hydroxyethylanilin, Semicarbazid, Benzoesäurehydrazid, 4-($\beta$-Sulfatoethylsulfonyl)-anilin, 3-($\beta$-Sulfatoethylsulfonyl)-anilin, 4-Amino-1-methoxy-benzol-2-sulfonsäure, 4-Amino-1-ethoxy-benzol-2-sulfonsäure, 4-Aminophenol-6-sulfonsäure, 2-Aminophenol-5-sulfonsäure, 4-Aminotoluol-2-sulfonsäure, $\beta$-N-Methylaminopropionitril, $\beta$-Aminopropionitril, Aminoessigsäure.

Zur Herstellung der Amino-Formazanverbindungen der Formel (6) setzt man eine aromatische Hydrazonverbindung der allgmeinen Formel (11)

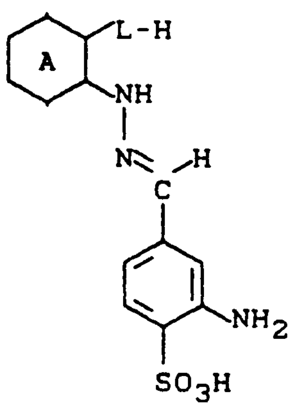

(11)

in welcher
A, L die obengenannten Bedeutungen haben
mit der Diazoniumverbindung eines aromatischen Amins der Formel (12)

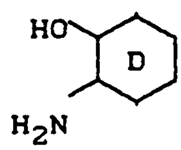

(12)

wobei D wie unter Formel (1) beschrieben substituiert sein kann, und mit einem kupfer- oder nickelabgebenden Mittel um. Man kann hierbei in üblicher und analog bekannter Verfahrensweise zur Herstellung von

Metallkomplexformazanen verfahren. Vorzugsweise wird das Verfahren bei einem pH-Wert von 4 bis 10, insbesondere von 7 bis 9 und bei einter Temperatur zwischen etwa 0 bis 20 ° C durchgeführt.

Die Zugabe der Reaktionskomponenten kann beliebig sein, jedoch läßt das Verfahren sich leicht als Dreikomponentenreaktion durchführen (Komponenten der Formeln (11) und (12) sowie kupfer- oder nickelabgebendes Mittel).

Als kupferabgebende Verbindungen kommen beispielsweise die einfachen und die komplexen Salze des Kupfers in Frage, wie beispielsweise Kupfersulfat, Kupferchlorid, Kupferacetat oder Kupfercarbonat und die Kupfersalze der Salicylsäure oder Weinsäure.

In analoger Weise kommen nickelabgebende Verbindungen in Betracht.

Verwendet man die Kupfersalze von Mineralsäuren, so arbeitet man zweckmäßig in Gegenwart eines säureabstumpfenden Mittels, wie beispielsweise eines Alkali-oder Erdalkalihydroxides oder -carbonats oder eines Alkalisalzes einer niederen Alkancarbonsäure, wie der Essigsäure, oder eines basischen Alkalisalzes der Phosphorsäure. Diese Alkali- oder Erdalkaliverbindungen sind insbesondere die Natrium-, Kalium- und Calciumverbindungen, bevorzugt beispielsweise Natriumhydroxid, Kaliumhydroxid, Calciumhydroxid, Natrium- und Kaliumcarbonat, Calciumcarbonat, Natriumcarbonat, Natriumacetat, Dinatriumhydrogenphosphat und Trinatriumphosphat.

Das kupferabgebende Mittel wird in äquimolaren Mengen verwendet, so daß auf eine zu bildende Verbindung der Formel (6) ein Kupferatom entfällt. Die Metallisierung geht üblicherweise schon bei Raumtemperatur zu Ende.

Die zur Herstellung der Kupferkomplexformazanverbindungen der allgemeinen Formel (6) zum Einsatz kommenden Verbindungen in der Weise der allgemeinen Formel (11) sind nach verschiedenen Methoden herstellbar. Man gewinnt sie z.B. aus den entsprechenden Phenyl- und Naphthylhydrazinen der allgemeinen Formel H-L-A-NH-$NH_2$ (mit A und L der obengenannten Bedeutungen), die in an und für sich üblicher und bekannter Weise, beispielsweise aus den entsprechenden Diazoniumverbindungen von Aminen der Formel (13)

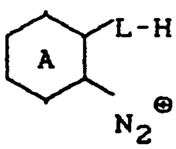

(13)

mit Salzen der schwefligen Säure unter Hydrolyse der intermediären N-Sulfonsäuren mit Mineralsäuren hergestellt werden können, vorzugsweise ohne deren Zwischenisolierung, durch Umsetzung mit 3-Amino-4-sulfobenzaldehyd.

Die neuen Farbstoffe der Formel (1) eignen sich zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure.

Beispiel 1

17,3 g der Kupferformazanverbindung der Formel

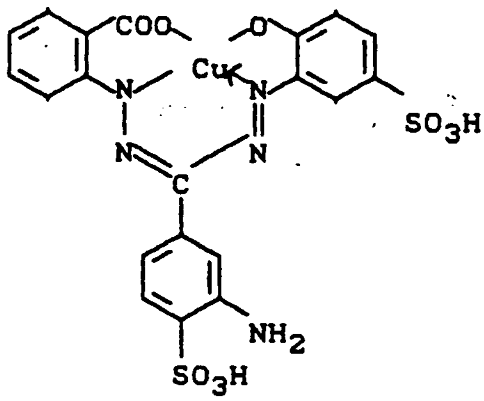

werden in 200 ml Wasser unter Zugabe von 2n LiOH-Lösung neutral gelöst. Man setzt 2 g $K_2HPO_4$ zu, kühlt durch Zugabe von 250 g Eis auf 0 ° C und läßt im Laufe von 5 Minuten 3 ml 2,4,6-Trifluortriazin zulaufen. Den pH-Wert hält man durch Zutropfen von 2n LiOH-Lösung zwischen 6 und 7, setzt gegebenenfalls nach Abklingen der LiOH-Aufnahme nochmals 0,5 ml 2,4,6-Trifluortriazin zu und führt die Kondensation unter obigen Bedingungen zu Ende. Der Grad der Vollständigkeit der Acylierung kann durch Dünnschichtchromatographie geprüft werden. Nach beendeter Acylierung mit Trifluortriazin wird bei 0 ° C mit 25 %igem Ammoniak auf pH 9 gestellt und bei einem pH-Wert von 8,5 bis 9 gehalten. Es wird solange bei 0 ° C und dem angegebenen pH-Wert nachgerührt, bis kein Verbrauch an Ammoniak mehr festzustellen ist. Man stellt dann auf pH 7, filtriert vom ausgefallenen LiF ab und erwärmt auf Raumtemperatur. Der entstandene Reaktivfarbstoff wird durch Zusatz von 100 g NaCl ausgesalzen. Man erhält einen Farbstoff der Formel

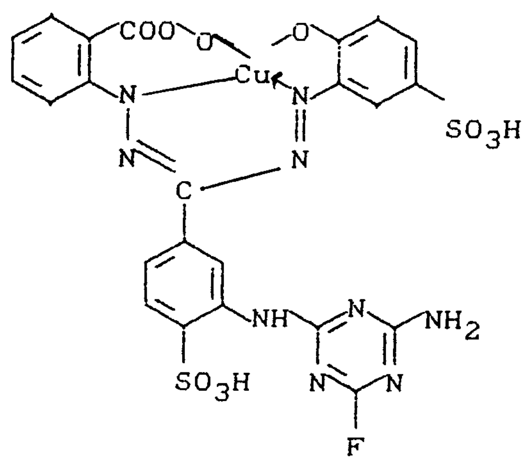

der Baumwolle aus langer Flotte in kräftigen, grünstichigen Blautönen und sehr guten Echtheiten färbt.

Die am Beginn des Beispiels 1 eingesetzte Formazanverbindung wird wie folgt dargestellt:

79,5 g Anthranilsäure werden in salzsaurer Lösung in üblicher Weise mit einer wäßrigen Lösung von 44 g Natriumnitrit bei 0 bis 5 ° C umgesetzt. Die erhaltene Diazoniumsalzlösung wird bei 0 bis 5 ° C in eine Mischung aus 452 g 40 %iger Natriumhydrogensulfitlösung und 45 g kristallinem Natriumcarbonat eingetragen, wobei der pH-Wert mit konzentrierter Natronlauge zwischen 5,5 und 6 gehalten wird. Man rührt bei Raumtemperatur bis zur Vollständigkeit der Umsetzung nach, setzt das 2-(Carboxyphenyl)-hydrazin durch Zugabe von 10 ml konzentrierter Salzsäure frei, gibt eine Suspension von 111 g 3-Amino-4-sulfobenzaldehyd in 500 ml Wasser zu und erhitzt diese Reaktionslösung nach Zugabe weiterer 110 ml konzentrierter Salzsäure 2 Stunden auf 100 ° C. Nach dem Abkühlen wird das Hydrazon der Formel

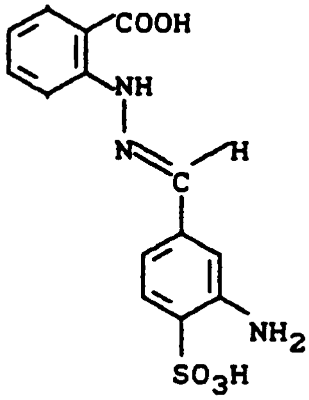

abgesaugt und mit Wasser gewaschen.

93,5 g des erhaltenen Hydrazons werden in 270 ml Wasser durch Zugabe von 20 %iger Natronlauge bei einem pH-Wert von 8 bis 9 gelöst. Diese Lösung wird bei 0 bis 10° C mit der wäßrigen Diazoniumsalzlösung aus 68,2 g 2-Aminophenol-4-sulfonsäure, welche durch übliche Diazotierung in wäßrig-salzsaurer Lösung dieses Aminophenols mit Natriumnitrit erhalten wurde, sowie einer Lösung von 90,5 g Kupfersulfatpentahydrat in 225 ml Wasser innerhalb von 2 Stunden versetzt, wobei man den pH-Wert mit 20 %iger Natronlauge zwischen 7,5 und 9 hält. Man rührt bis zur Beendigung der Kupplung nach, deren Verlauf dünnschichtchromatographisch verfolgt werden kann. Der entstehende Kupferkomplex wird durch Zugabe von Natriumchlorid ausgesalzen.

Zur Überführung in die stabile Komplexform werden 80 g des oben dargestellten Metallkomplexes in 800 ml Wasser 15 Stunden unter Rückfluß erhitzt. Nach Abkühlen auf Raumtemperatur kann der Kupferformazankomplex der Formel

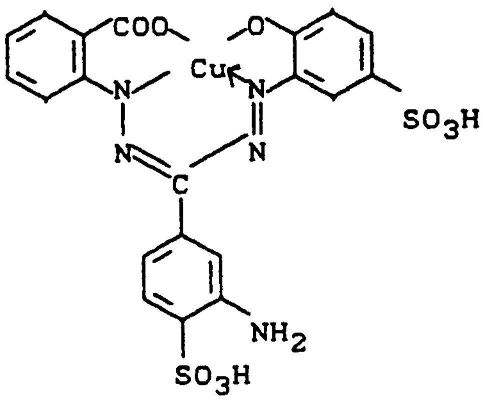

durch Abdestillieren des Wassers isoliert werden.

Weitere blaue Farbstoffe erhält man, wenn man anstelle von Ammoniak äquivalente Mengen der nachfolgenden aliphatischen Amine einsetzt:

Beispiele 2 bis 15

Methylamin
Dimethylamin
Ethylamin
Diethylamin
n-Propylamin
iso-Propylamin
N-Butylamin
2-Hydroxyethylamin
2-Sulfoethylamin

2-Sulfatoethylamin
Bis-(2-hydroxyethyl)-amin
3-Hydroxypropylamin
2-Hydroxypropylamin
Cyclohexylamin

Beispiel 16

17,3 g der in Beispiel 1 eingesetzten Aminoformazanverbindung werden bei pH 6 bis 6,5 mit 3 ml 2,4,6-Trifluortriazin wie in Beispiel 1 beschrieben acyliert.

Nach beendeter Umsetzung werden 3,0 g Anilin bei 0°C zugegeben, wobei der pH-Wert mit 2n LiOH-Lösung zwischen 6,5 und 7 gehalten wird. Man rührt bei 0°C bis zur Konstanz des pH-Wertes nach, läßt auf Raumtemperatur erwärmen, filtriert vom unlöslichen Lithiumfluorid ab und isoliert den entstandenen Reaktivfarbstoff der Formel

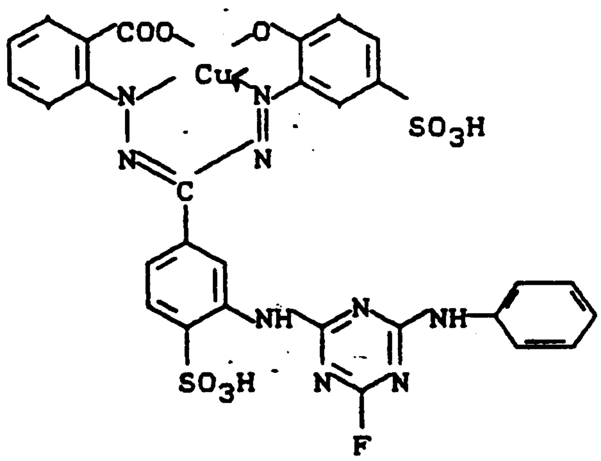

durch Zugabe von Natriumchlorid.

Der Farbstoff färbt Baumwolle aus langer Flotte in kräftigen Blautönen und sehr guten Echtheiten.

Weitere blaue Farbstoffe erhält man, wenn man anstelle von Anilin äquivalente Mengen der nachfolgenden aromatischen Amine einsetzt:

| Beispiele 17 bis 46 | |
|---|---|
| N-Methylanilin | 2,4-Dichloranilin |
| N-Ethylanilin | 2,5-Dichloranilin |
| 2-Methylanilin | 5-Chlor-2-methylanilin |
| N-Ethyl-2-methylanilin | 4-Chlor-2-methylanilin |
| 3-Methylanilin | 5-Chlor-2-methoxyanilin |
| N-Ethyl-3-methylanilin | 3-Methoxyanilin |
| 4-Methylanilin | 3-Ethoxyanilin |
| N,4-Dimethylanilin | 4-Methoxyanilin |
| N-Ethyl-4-methylanilin | 4-Ethoxyanilin |
| 4-Ethylanilin | 3-Aminobenzolsulfonsäure |
| 2,5-Dimethylanilin | 5-Amino-2-chlorbenzolsulfonsäure |
| 2-Chloranilin | 2-Aminobenzolsulfonsäure |
| 2-Chlor-N-ethylanilin | 2-Amino-5-chlorbenzolsulfonsäure |
| 3-Chloranilin | 4-Aminobenzolsulfonsäure |
| 4-Chloranilin | 4-Amino-3-chlorbenzolsulfonsäure |

Beispiel 47

34,6 g der in Beispiel 1 eingesetzten Aminoformazanverbindung werden in 500 ml Wasser unter

Zugabe von 2n LiOH-Lösung neutral gelöst. Man kühlt durch Zugabe von 250 g Eis auf 0°C und trägt innerhalb von 5 Minuten 4,6 g 2,4,6-Trichlortriazin in die Lösung ein. Der pH-Wert wird durch Zugabe von Zn LiOH-Lösung zwischen 6 und 7 gehalten. Es wird solange bei 0 bis 5°C weitergerührt, bis die Kondensation beendet ist, was sich dünnschichtchromatographisch nachweisen läßt Man stellt dann den pH-Wert mit konzentrierter Ammoniaklösung auf 9, erwärmt auf 40°C und hält den pH-Wert durch Zugabe weiterer Ammoniaklösung auf 8,5 bis 9. Man rührt solange bei 40°C weiter, bis kein Ammoniakverbrauch mehr festzustellen ist. Man filtriert die warme Lösung, stellt den pH-Wert auf 7 und fällt den gebildeten Reaktivfarbstoff der Formel

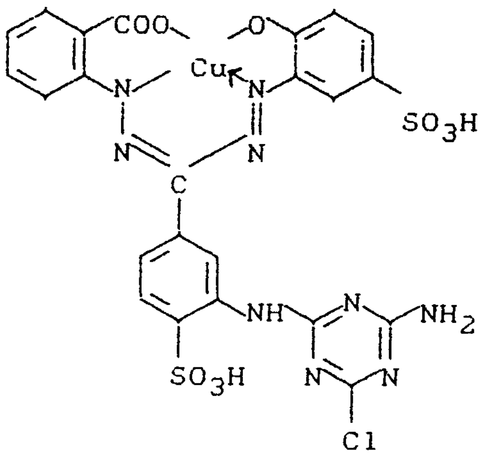

durch Zugabe von NaCl aus.

Der isolierte Farbstoff färbt Baumwolle im Textildruck in kräftigen blauen Farbtönen mit sehr guten Echtheiten.

Weitere blaue Farbstoffe für den Textildruck erhält man, wenn man anstelle von Ammoniak äquivalente Mengen der nachfolgenden aromatischen Amine einsetzt.

| Beispiele 48 bis 84 | |
|---|---|
| Methylamin | 4-Ethylanilin |
| Dimethylamin | 2,5-Dimethylanilin |
| Ethylamin | 2-Chloranilin |
| Diethylamin | 3-Chloranilin |
| n-Propylamin | 4-Chloranilin |
| iso-Propylamin | 2,4-Dichloranilin |
| n-Butylamin | 2,5-Dichloranilin |
| 2-Hydroxyethylamin | 5-Chlor-2-methylanilin |
| 2-Sulfoethylamin | 3-Methoxyanilin |
| 2-Sulfatoethylamin | 3-Ethoxyanilin |
| Bis-(2-hydroxyethyl)-amin | 4-Methoxyanilin |
| 3-Hydroxypropylamin | 4-Ethoxyanilin |
| 2-Hydroxypropylamin | 3-Aminobenzolsulfonsäure |
| Cyclohexylamin | 5-Amino-2-chlorbenzolsulfonsäure |
| Anilin | 2-Aminobenzolsulfonsäure |
| N-Methylanilin | 2-Amino-5-chlorbenzolsulfonsäure |
| N-Ethylanilin | 4-Aminobenzolsulfonsäure |
| 3-Methylanilin | 4-Amino-3-chlorbenzolsulfonsäure |
| 4-Methylanilin | |

Beispiel 85

14,7 g der Kupferformazanverbindung der Formel

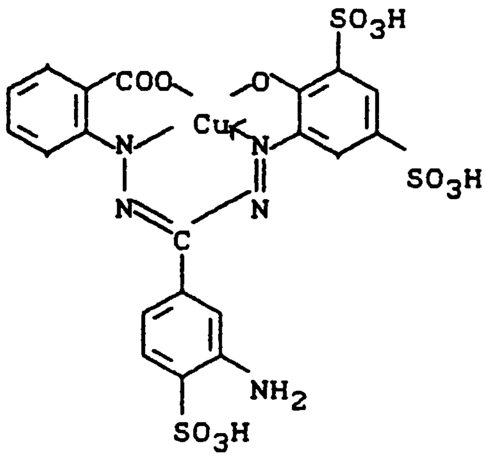

werden in 200 ml Wasser under Zugabe von 2n LiOH-Lösung neutral gelöst und auf 40 ° C erwärmt. Bei dieser Temperatur werden 6 g 2,3-Dichlorchinoxalin-6-carbonsäurechlorid eingetragen und der pH-Wert mit 2n LiOH-Lösung auf pH 6 bis 6,5 gehalten. Es wird solange bei 40 ° C weitergerührt, bis die Kondensation beendet ist. Man filtriert die warme Lösung über Celite und isoliert den entstandenen Reaktivfarbstoff der Formel

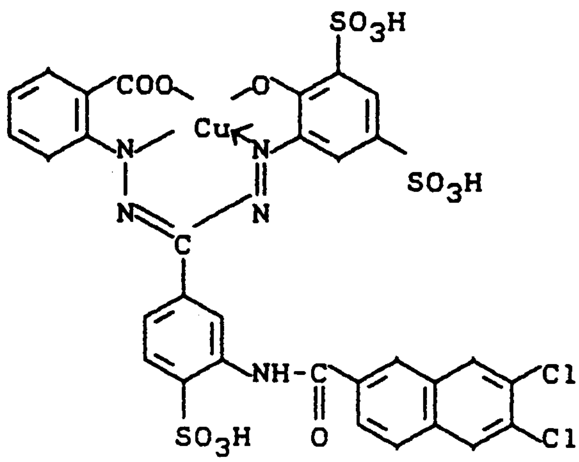

durch Aussalzen mit KCl.

Der Farbstoff färbt Baumwolle aus langer Flotte in kräftigen Blautönen und guten Echtheiten.

Die oben eingesetzte Aminoformazanverbindung wird analog dem Beispiel 1 dargestellt, indem man anstelle von 2-Aminophenol-4-sulfonsäureäquivalente Mengen der 2-Aminophenol-4,6-disulfonsäure einsetzt.

Weitere Reaktivfarbstoffe mit der Reaktivkomponente 2,3-Dichlorchinoxalin-6-carbonsäurechlorid werden gemäß Beispiel 84 erhalten, wenn man anstelle der Anthranilsäure die in der Spalte 1 genannten Sulfoanthranilsäuren und anstelle der 2-Aminophenol-4,6-disulfonsäure die in der Spalte 2 genannten 2-Aminophenole einsetzt.

| Beispiele 86 bis 89 | |
|---|---|
| 2-Amino-4-sulfobenzoesäure | 2-Aminophenol-4-sulfonsäure |
| 2-Amino-5-sulfobenzoesäure | 2-Aminophenol-4-sulfonsäure |
| 2-Amino-4-sulfobenzoesäure | 2-Aminophenol-4,6-sulfonsäure |
| 2-Amino-5-sulfobenzoesäure | 2-Aminophenol-4,6-sulfonsäure |

Beispiel 90

20,6 g der Kupferformazanverbindung der Formel

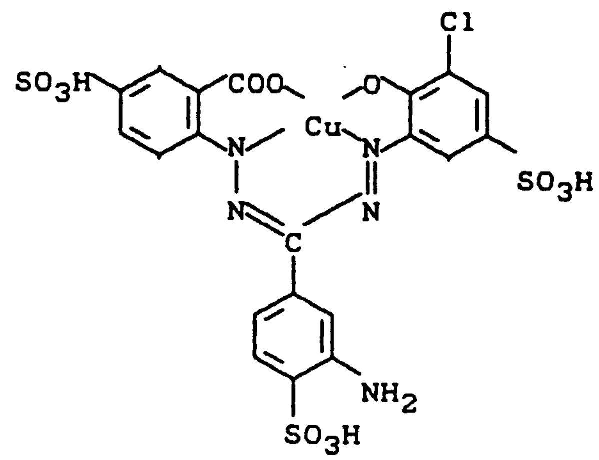

werden in 300 ml Wasser unter Zugabe von 2n LiOH-Lösung neutral gelöst. Man setzt 2 g $KH_2PO_4$ zu, kühlt unter Zugabe von 250 g Eis aus 0 ° C und läßt im Laufe von 10 Minuten 3 ml 2,4,6-Trifluortriazin zulaufen. Den pH-Wert hält man durch Zutropfen von 2n LiOH-Lösung zwischen 6 und 7, setzt gegebenenfalls nach Abklingen der LiOH-Aufnahme nochmals 0,5 ml 2,4,6-Trifluortriazin zu und führt die Kondensation unter obigen Bedingungen zu Ende. Der Grad der Vollständigkeit der Acylierung kann durch Dünnschichtchromatographie geprüft werden. Nach beendeter Acylierung mit Trifluortriazin wird bei 0 ° C mit 25 %igem Ammoniak auf pH 9 gestellt und bei einem pH-Wert von 8,5 bis 9 gehalten. Es wird solange bei 0 ° C nachgerührt, bis kein Verbrauch an Ammoniak mehr festzustellen ist. Man stellt dann auf pH 7, filtriert vom ausgefallenen LiF ab und erwärmt auf Raumtemperatur. Der entstandene Reaktivfarbstoff wird durch Zusatz von 100 g NaCl ausgesalzen. Man erhält einen Farbstoff der Formel

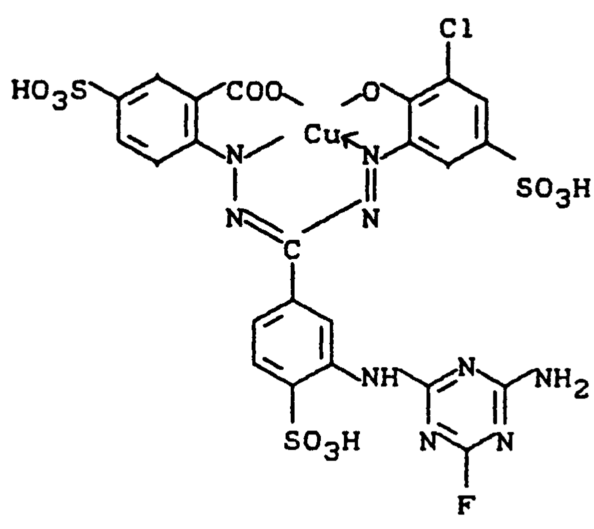

der Baumwolle aus langer Flotte in kräftigen Blautönen und sehr guten Echtheiten färbt.

Die oben eingesetzte Aminoformazanverbindung wird analog dem Beispiel 1 dargestellt, indem man anstelle von Anthranilsäure äquivalente Mengen der 2-Amino-5-sulfobenzoesäure und anstelle der 2-Aminophenol-4-sulfonsäure äquivalente Mengen der 3-Amino-5-chlor-4-hydroxybenzolsulfonsäure einsetzt.

Verwendet man die in der folgenden Tabelle in Spalte 1 angegebenen o-Aminobenzoesäuren und die in Spalte 2 angegebenen o-Aminophenole, acyliert die resultierende Farbbase mit 2,4,6-Trifluortriazin und kondensiert den entstehenden Difluortriazinfarbstoff mit den in Spalte 3 aufgeführten aliphatischen und aromatischen Aminen, erhält man weitere Reaktivfarbstoffe, die Baumwolle in blauer Nuance mit sehr guten

Echtheiten färben.

| Beispiele 91 bis 103 | | |
|---|---|---|
| 2-Amino-5-sulfobenzoesäure | 3-Amino-5-chlor-4-hydroxybenzolsulfonsäure | N-methylamin |
| " | " | N-Ethylamin |
| " | " | Dimethylamin |
| " | " | Ethanolamin |
| " | " | Cyclohexylamin |
| " | " | Morpholin |
| " | " | N-Methylanilin |
| " | " | N-Ethylanilin |
| " | " | p-Methylanilin |
| " | " | p-Chloranilin |
| " | " | p-Methoxyanilin |
| " | " | p-Ethoxyanilin |
| " | " | 3-Sulfoanilin |

| Beispiele 104 bis 120 | | |
|---|---|---|
| 2-Amino-4-sulfobenzoesäure | 3-Amino-5-chlor-4-hydroxybenzolsulfonsäure | Ammoniak |
| " | " | N-Methylamin |
| " | " | N-Ethylamin |
| " | " | Dimethylamin |
| " | " | Ethanolamin |
| " | " | Cyclohexylamin |
| " | " | Morpholin |
| " | " | N-Methylanilin |
| " | " | N-Ethylanilin |
| " | " | p-Methylanilin |
| " | " | p-Chloranilin |
| " | " | p-Methoxyanilin |
| " | " | p-Ethoxyanilin |
| " | " | 3-Sulfoanilin |
| 2 Amino-5-sulfobenzoesäure | 2-Aminophenol-4,6-disulfonsäure | Ammoniak |
| " | " | N-Methylamin |
| " | " | N-Ethylamin |

| Beispiele 121 bis 139 | | |
|---|---|---|
| 2 Amino-5-sulfobenzoesäure | 2-Aminophenol-4,6-disulfonsäure | Dimethylamin |
| " | " | Ethanolamin |
| " | " | Cyclohexylamin |
| " | " | Morpholin |
| " | " | N-Methylanilin |
| " | " | N-Ethylanilin |
| | 2-Aminophenol-4,6-disulfonsäure | p-Methylanilin |
| " | " | p-Chloranilin |
| " | " | p-Methoxyanilin |
| " | " | p-Ethoxyanilin |
| " | " | 3-Sulfoanilin |
| 2 Amino-4-sulfobenzoesäure | " | Ammoniak |
| " | " | N-Methylamin |
| " | " | N-Ethylamin |
| " | " | Dimethylamin |
| " | " | Ethanolamin |
| " | " | Cyclohexylamin |
| " | " | Morpholin |
| " | " | N-Methylanilin |

| Beispiele 140 bis 155 | | |
|---|---|---|
| 2 Amino-4-sulfobenzoesäure | " | N-Ethylanilin |
| " | " | p-Methylanilin |
| " | " | p-Chloranilin |
| " | " | p-Methoxyanilin |
| " | " | p-Ethoxyanilin |
| " | " | 3-Sulfoanilin |
| 2 Amino-5-sulfobenzoesäure | 3-Amino-4-hydroxy-5-nitrobenzolsulfonsäure | Ammoniak |
| " | " | N-Methylamin |
| " | " | N-Ethylamin |
| " | " | Dimethylamin |
| " | " | Ethanolamin |
| " | " | Cyclohexylamin |
| " | " | Morpholin |
| " | " | N-Methylanilin |
| " | " | N-Ethylanilin |
| " | " | p-Methylanilin |

| Beispiele 156 bis 173 | | |
|---|---|---|
| 2 Amino-5-sulfobenzoesäure | 3-Amino-4-hydroxy-5-nitrobenzolsulfonsäure | p-Chloranilin |
| " | " | p-Methoxyanilin |
| " | " | p-Ethoxyanilin |
| " | " | 3-Sulfoanilin |
| 2 Amino-4-sulfobenzoesäure | 3-Amino-4-hydroxy-5-nitrobenzolsulfonsäure | Ammoniak |
| " | " | N-Methylamin |
| " | " | N-Ethylamin |
| " | " | Dimethylamin |
| " | " | Ethanolamin |
| " | " | Cyclohexylamin |
| " | " | Morpholin |
| " | " | N-Methylanilin |
| " | " | N-Ethylanilin |
| " | " | p-Methylanilin |
| " | " | p-Chloranilin |
| " | " | p-Methoxyanilin |
| " | " | p-Ethoxyanilin |
| " | " | 3-Sulfoanilin |

Beispiel 174

20,0 g der Kupferformazanverbindung der Formel

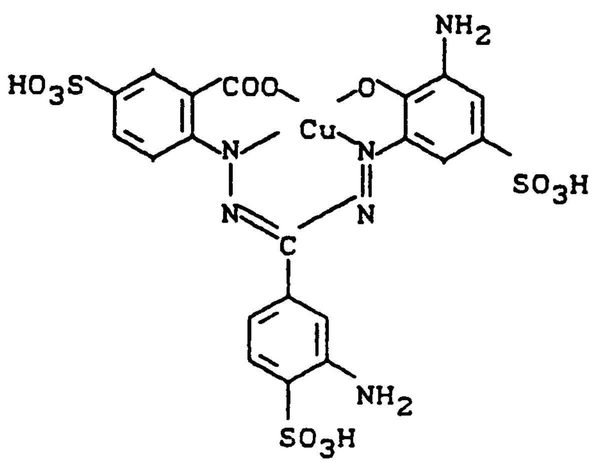

werden mit 500 ml Wasser neutral gelöst. Man setzt 2 g $K_2HPO_4$ zu, kühlt auf 0 ° C und tropft 5,9 ml 2,4,6-Trifluortriazin zu. Den pH-Wert hält man durch Zugabe von 2n LiOH-Lösung zwischen 6 und 7, setzt gegebenenfalls nach Abklingen der LiOH-Aufnahme nochmals 1 ml Trifluortriazin zu und führt die Kondensation unter obigen Bedingungen zu Ende. Nach beendeter Acylierung mit Trifluortriazin wird bei 0 ° C mit 25 %igem Ammoniak auf pH 9 gestellt und bei einem pH-Wert von 8,5 bis 9 gehalten. Es wird solange bei 0 ° C und dem angegebenen pH-Wert nachgerührt, bis kein Verbrauch an Ammoniak mehr festzustellen ist. Man stellt dann auf pH 7, filtriert vom ausgefallenen LiF ab und erwärmt auf Raumtemperatur. Der entstandene Reaktivfarbstoff wird durch Zusatz von 90 g Natriumchlorid ausgesalzen. Man erhält einen Farbstoff der Formel

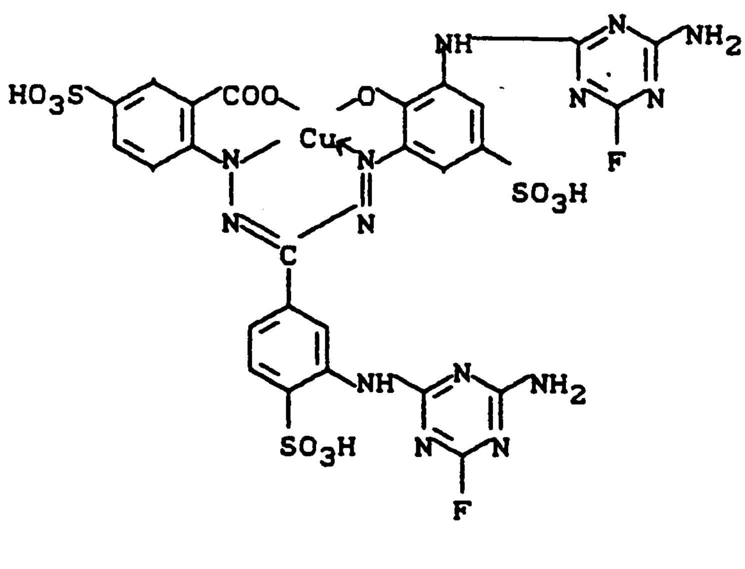

der Baumwolle aus langer Flotte in kräftigen Blautönen und sehr guten Echtheiten färbt.

Die eingesetzte Diaminoformazanverbindung wird wie folgt dargestellt.

28,3 g des Hydrazons aus 2-Carboxyphenylhydrazin-4-sulfonsäure mit 3-Amino-4-sulfobenzaldehyd werden in 100 ml Wasser unter Zugabe von 20 %iger Natronlauge bei einem pH von 9 gelöst. Diese Lösung wird bei 0 bis 10 °C mit der wäßrigen Diazoniumsalzlösung aus 16,8 g 3-(Acetylamino)-5-amino-4-hydroxybenzolsulfonsäure, welche durch übliche Diazotierung in wäßrigsaurer Lösung dieses Aminophenols mit Natriumnitrit in Form einer wäßrigen Lösung erhalten wurde, sowie einer Lösung von 17,0 g Kupfersulfatpentahydrat in 40 ml Wasser innerhalb von 2 Stunden versetzt, wobei man den pH-Wert mit 20 %iger Natronlauge zwischen 7,5 und 9 hält. Man rührt bis zur Beendigung der Kupplung nach, deren Verlauf dünnschichtchromatographisch verfolgt werden kann. Man gibt nun 50 ml konzentrierte Natronlauge zu und erhitzt auf 100 °C, um die Acetylaminogruppe zur Aminogruppe zu verseifen. Nach vollständiger Verseifung kühlt man auf Raumtemperatur ab, stellt den pH-Wert der Reaktionslösung mit konzentrierter Salzsäure auf 7 und isoliert den Farbstoff der Formel

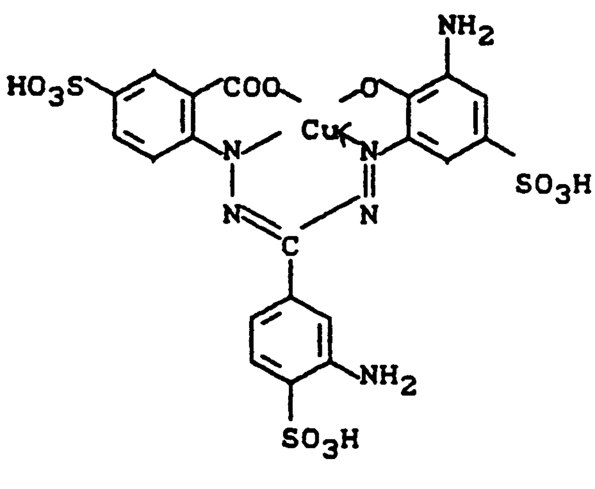

durch Aussalzen mit 50 g Natriumchlorid.

Das eingesetzte Hydrazon wird wie in Beispiel 1 beschrieben dargestellt, indem man anstelle der Anthranilsäure äquivalente Mengen der 2-Amino-5-sulfobenzoesäure verwendet.

Weitere Reaktivfarbstoffe werden gemäß Beispiel 172 erhalten, wenn man anstelle der 2-Amino-5-sulfobenzoesäure die in Spalte 1 genannten Anthranilsäuren und anstelle von Ammoniak äquivalente Mengen der in Spalte 2 genannten aliphatischen und aromatischen Amine verwendet.

| Beispiele 175 bis 199 | |
|---|---|
| 2-Amino-5-sulfobenzoesäure | Methylamin |
| " | Ethylamin |
| " | 2-Hydroxyethylamin |
| " | 2-Sulfoethylamin |
| " | 2-Sulfatoethylamin |
| " | 3-Hydroxypropylamin |
| " | Cyclohexylamin |
| " | Morpholin |
| " | Anilin |
| " | N-Methylanilin |
| " | N-Ethylanilin |
| " | 4-Methoxyanilin |
| " | 4-Methylanilin |
| " | 2-Aminobenzolsulfonsäure |
| " | 3-Aminobenzolsulfonsäure |
| " | 4-Aminobenzolsulfonsäure |
| " | 5-Amino-2-chlorbenzolsulfonsäure |
| 2-Amino-4-sulfobenzoesäure | Ammoniak |
| " | Methylamin |
| " | Ethylamin |
| " | 2-Hydroxyethylamin |
| " | 2-Sulfoethylamin |
| " | 2-Sulfatoethylamin |
| " | 3-Hydroxypropylamin |
| " | Morpholin |

| Beispiele 200 bis 227 | |
|---|---|
| 2-Amino-4-sulfobenzoesäure | Cyclohoxylamin |
| " | Anilin |
| " | N-Methylanilin |
| " | N-Ethylanilin |
| " | 4-Methoxyanilin |
| " | 4-Methylanilin |
| " | 2-Aminobenzolsulfonsäure |
| " | 3-Aminobonzolsulfonoäure |
| " | 4-Aminobenzolsulfonsäure |
| " | 5-Amino-2-chlorbenzolsulfonsäure |
| 2-Aminobenzoesäure | Ammoniak |
| " | Methylamin |
| " | Ethylamin |
| " | 2-Hydroxyethylamin |
| " | 2-Sulfoethylamin |
| " | 2-Sulfatoethylamin |
| " | 3-Hydroxypropylamin |
| " | Morpholin |
| " | Cyclohexylamin |
| " | Anilin |
| " | N-Methylanilin |
| " | N-Ethylanilin |
| " | 4-Methoxyanilin |
| " | 4-Methylanilin |
| " | 2-Aminobenzolsulfonsäure |
| " | 3-Aminobenzolsulfonsäure |
| " | 4-Aminobenzolsulfonsäure |
| " | 5-Amino-2-chlorbenzolsulfonsäure |

Beispiel 228

Verfährt man bei der Herstellung des Formazanfarbstoffes wie in Beispiel 1 angegeben, ersetzt jedoch das Kupfersulfat durch eine entsprechende Menge Nickelsulfat, so erhält man den entsprechenden Nickelkomplexfarbstoff, der Baumwolle in einem rotstichigen Blauton färbt.

## Patentansprüche

**1.** Farbstoffe, die in Form der freien Säure der Formel

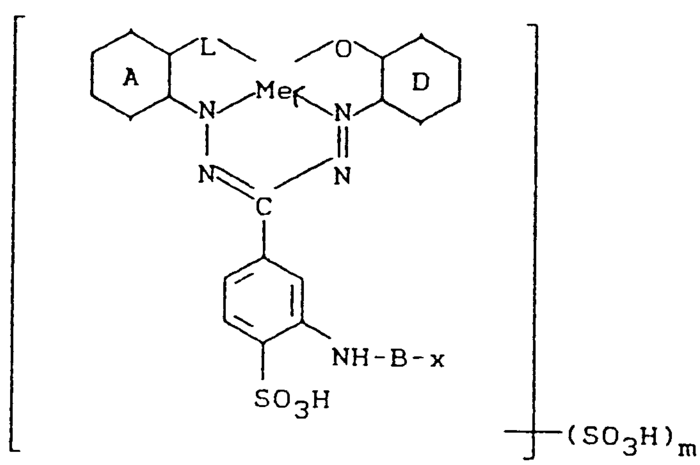

(1)

entsprechen, worin

A gegebenenfalls substituiertes Phenylen,
D gegebenenfalls substituiertes Phenylen oder Naphthylen,
L Sauerstoff oder die Carboxylgruppe, wobei sich Substituent L in ortho-Stellung zum Substituenten N befindet,
B direkte Bindung oder ein zweiwertiges Brückenglied,
X Rest einer Reaktivkomponente,
Me Kupfer oder Nickel und
m 1 bis 4 bedeuten.

**2.** Farbstoffe gemäß Anspruch 1, die in Form der freien Säure der Formel

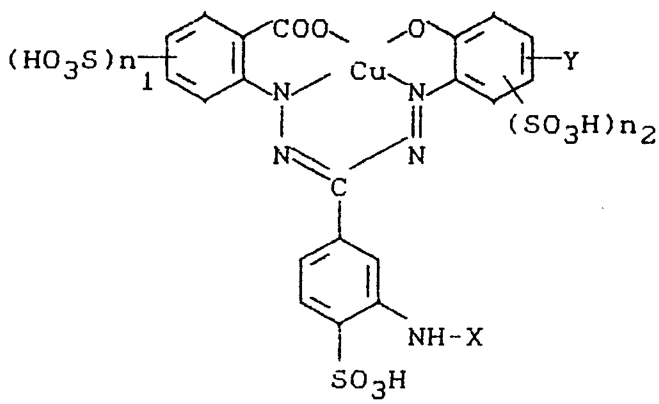

entsprechen, worin

$n_1$, $n_2$ 0 oder 1 oder 2,
Y Halogen, Nitro, Alkoxy ($C_1$-$C_4$), Alkyl ($C_1$-$C_4$),
X ein Monohalogentriazin- oder ein Dichlortriazin-Rest bedeutet.

**3.** Farbstoffe gemäß Anspruch 1, die in Form der freien Säure der Formel

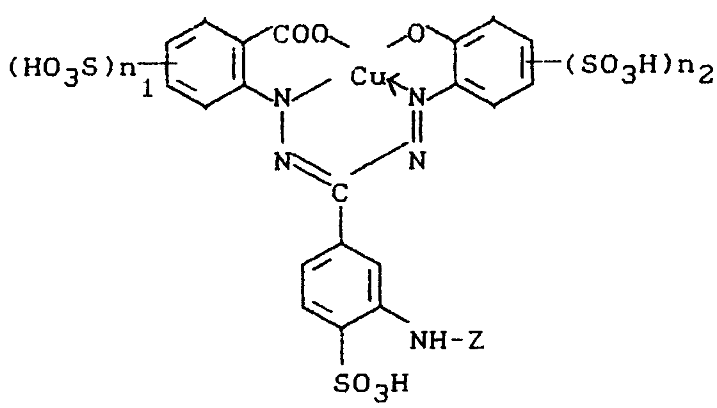

entsprechen, worin

$n_1$, $n_2$ entweder 0 oder 1 ist und
Z ein Triazinylrest der Formel (3)

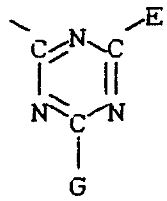

(3)

ist, worin

G für Chlor oder Fluor und

E für Chlor, oder einen nicht mit Cellulose reaktiven Rest wie gegebenenfalls substituierte Aminogruppe stehen.

**4.** Farbstoffe gemäß Anspruch 1, die in Form der freien Säure der Formel

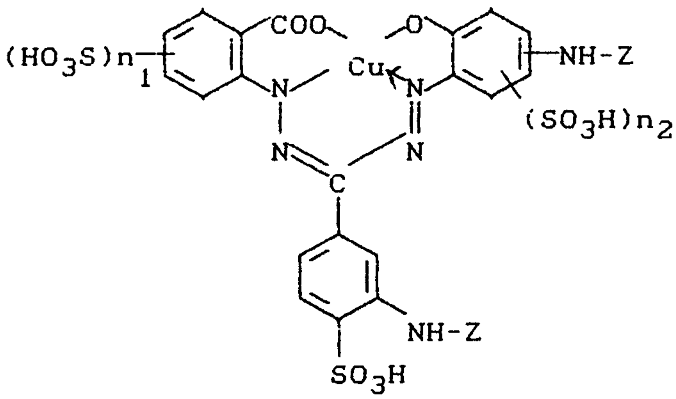

entsprechen, wobei

$n_1$, $n_2$ entweder 0 oder 1 und

Z ein Triazinylrest der Formel

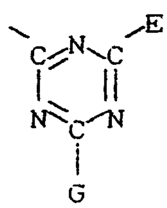

ist, worin

G für Chlor oder Fluor und

E für Chlor, oder einen nicht mit Cellulose reaktiven Rest wie gegebenenfalls substituierte Aminogruppe stehen.

**5.** Farbstoffe gemäß Anspruch 1, die in Form der freien Säure der Formel

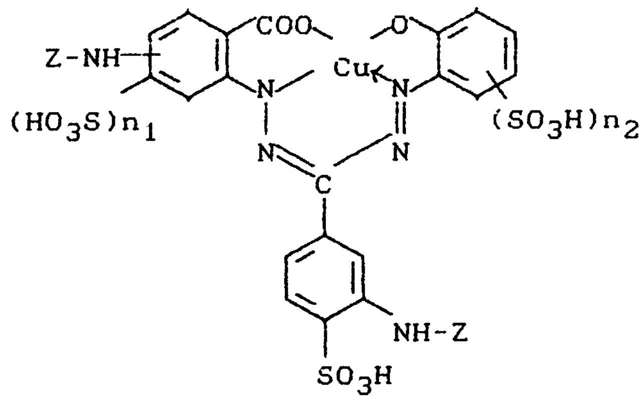

entsprechen, wobei

$n_1$, $n_2$ entweder 0 oder 1 und

Z ein Triazinylrest der Formel

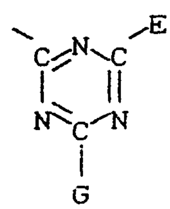

ist, worin

G für Chlor oder Fluor und

E für Chlor, oder einen nicht mit Cellulose reaktiven Rest wie gegebenenfalls substituierte Aminogruppe stehen.

**6.** Farbstoff gemäß Anspruch 1 der Formel

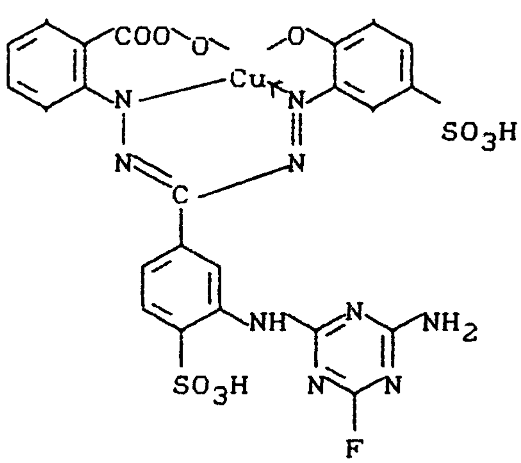

**7.** Verfahren zur Herstellung von Farbstoffen gemäß Anspruch 1, dadurch gekennzeichnet, daß man Verbindungen der Formel

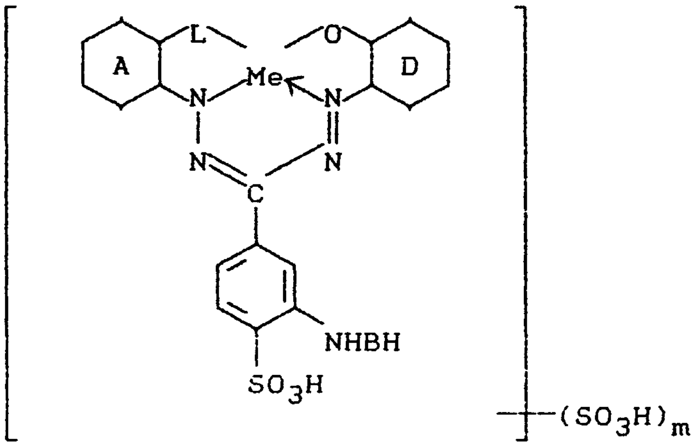

mit einer Reaktivkomponente und gegebenenfalls einem Amin umsetzt.

8. Verfahren zum Färben und Bedrucken von Fasermaterialien, dadurch gekennzeichnet, daß man Farbstoffe gemäß Anspruch 1 verwendet.

## Claims

1. Dyestuffs which, in the form of the free acid, conform to the formula

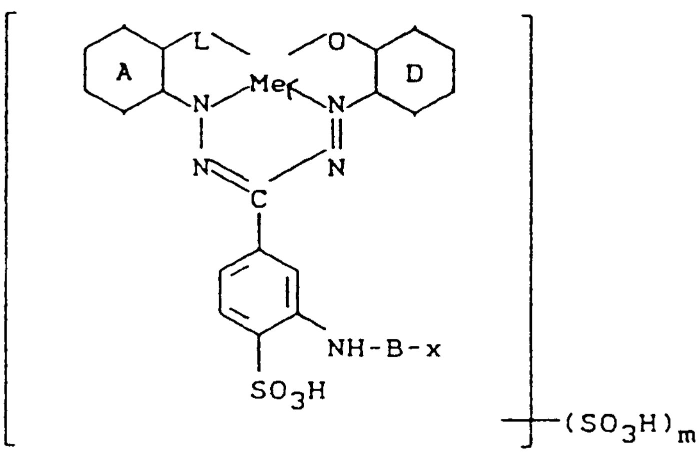

(1)

in which

A denotes substituted or unsubstituted phenylene,
D denotes substituted or unsubstituted phenylene or naphthylene,
L denotes oxygen or a carboxyl group, substituent L being in the ortho-position relative to substituent N,
B denotes a direct bond or a divalent bridging link,
X denotes a radical of a reactive component,
Me denotes copper or nickel and
m denotes 1 to 4.

2. Dyestuffs according to Claim 1 which, in the form of the free acid, conform to the formula

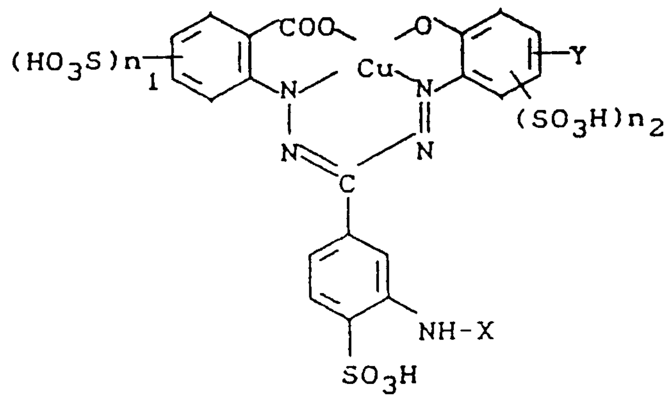

in which

- $n_1$, $n_2$ denote 0 or 1 or 2,
- Y denotes halogen, nitro, alkoxy ($C_1$-$C_4$), alkyl ($C_1$-$C_4$),
- X denotes a monohalotriazine or a dichlorotriazine radical.

**3.** Dyestuffs according to Claim 1 which, in the form of the free acid, conform to the formula

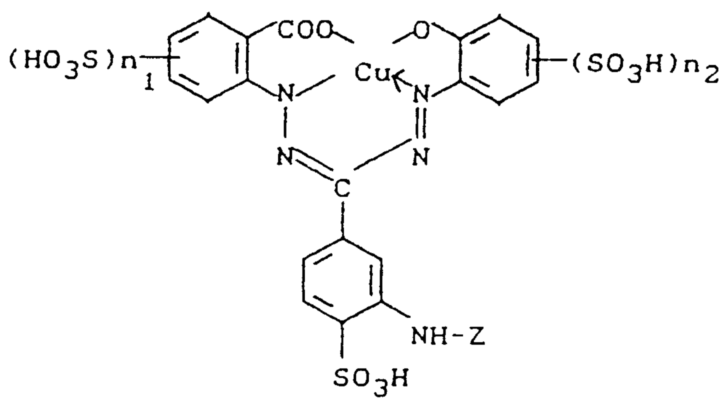

in which

- $n_1$, $n_2$ is either 0 or 1 and
- Z is a triazinyl radical of the formula (3)

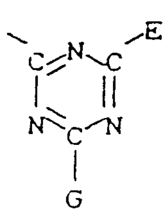

(3)

in which

- G stands for chloro or fluoro and
- E stands for chloro or a radical which does not react with cellulose such as a substituted or unsubstituted amino group.

**4.** Dyestuffs according to Claim 1, which, in the form of the free acid, conform to the formula

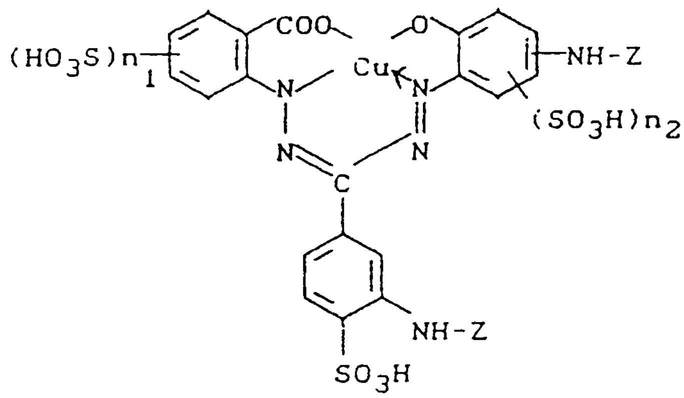

in which

n1, n2 is either 0 or 1 and

Z is a triazinyl radical of the formula

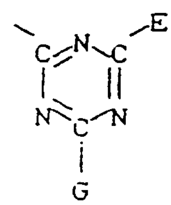

in which

G stands for chloro or fluoro and

E stands for chloro or a radical which does not react with cellulose such as a substituted or unsubstituted amino group.

5. Dyestuffs according to Claim 1, which, in the form of the free acid, conform to the formula

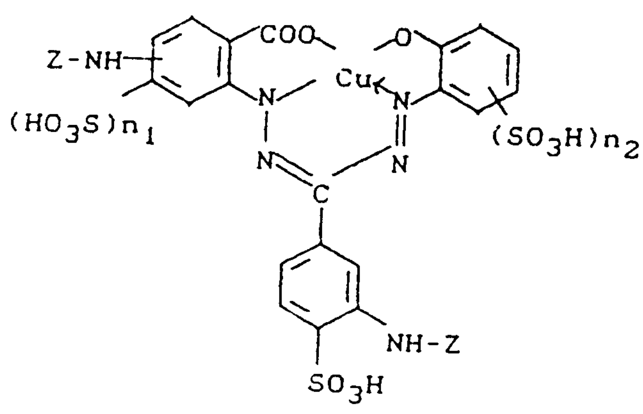

in which

n1, n2 is either 0 or 1 and

Z is a triazinyl radical of the formula

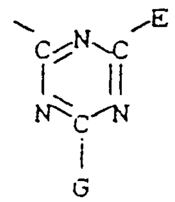

in which

G stands for chloro or fluoro and

E stands for chloro or a radical which does not react with cellulose such as a substituted or unsubstituted amino group.

**6.** Dyestuff according to Claim 1 of the formula

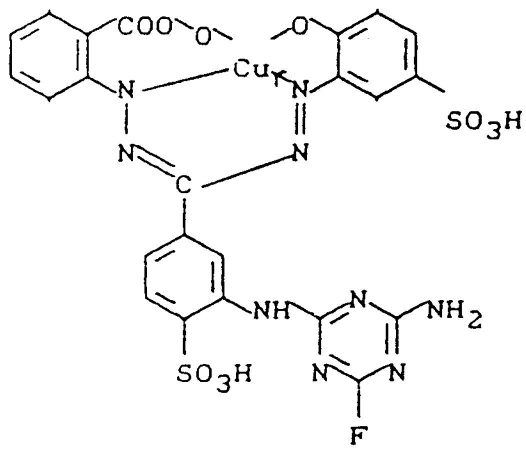

**7.** Process for the preparation of dyestuffs according to Claim 1, characterised in that compounds of the formula

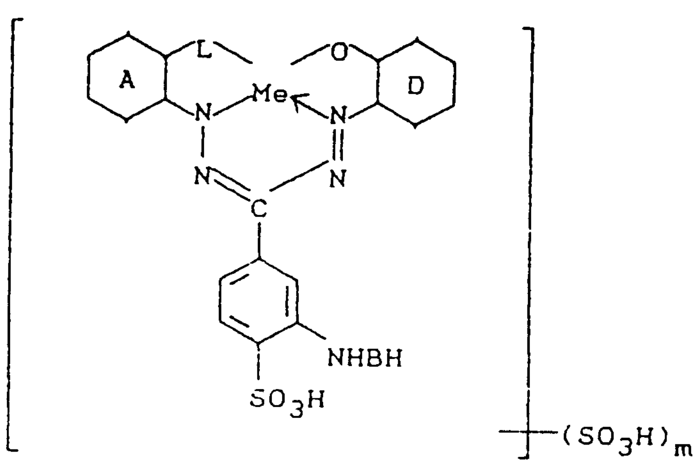

are reacted with a reactive component and possibly an amine.

**8.** Process for dyeing and printing fibre materials, characterised in that dyestuffs according to Claim 1 are

used.

## Revendications

1. Colorants qui, sous forme de l'acide libre, répondent à la formule

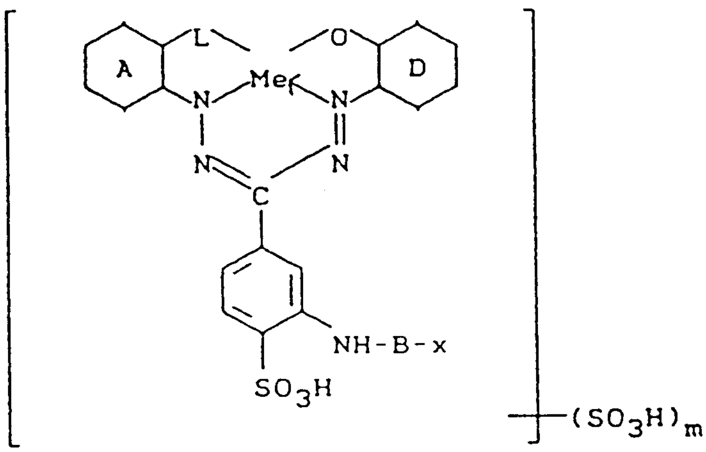

(1)

dans laquelle

- A représente un groupe phénylène éventuellement substitué,
- D représente un groupe phénylène ou naphtylène éventuellement substitué,
- L représente un atome d'oxygène ou le groupe carboxyle, le substituant L étant en position ortho par rapport au substituant N,
- B représente une liaison directe ou un terme ou chaînon divalent de pontage,
- X représente le reste d'un composant réactif,
- Me représente le cuivre ou le nickel, et
- m vaut 1 à 4.

2. Colorants selon la revendication 1 qui, sous forme de l'acide libre, répondent à la formule

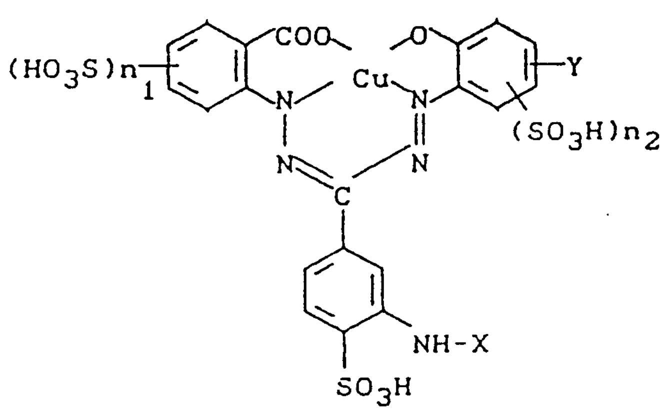

dans laquelle

- $n_1$ et $n_2$ valent 0 ou 1 ou 2,
- Y représente un atome d'halogène, un groupe nitro, alcoxy en $C_1$ à $C_4$) alkyle en ($C_1$ à $C_4$),
- X représente un reste monohalogénotriazine ou un reste dichlorotriazine.

**3.** Colorants selon la revendication 1 qui, sous forme de l'acide libre, répondent à la formule

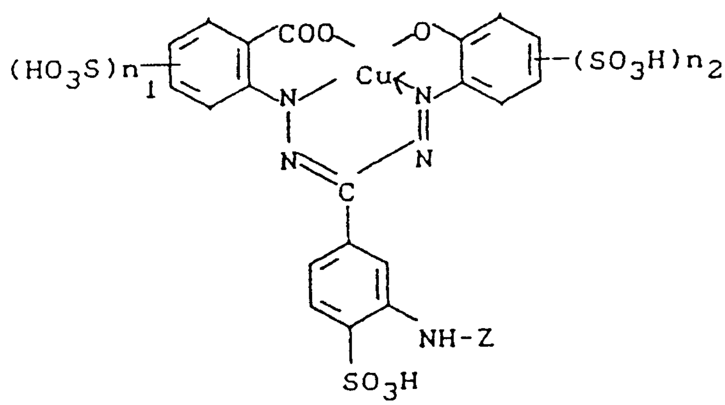

dans laquelle

$n_1$ et $n_2$ valent 0 ou 1, et

Z représente un reste triazinyle de formule (3)

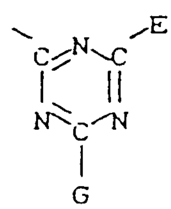

(3)

dans laquelle

G représente un atome de chlore ou de fluor, et

E représente un atome de chlore ou un reste ne réagissant pas avec la cellulose, tel qu'un groupe amino éventuellement substitué.

**4.** Colorants selon la revendication 1 qui, sous forme de l'acide libre, répondent à la formule

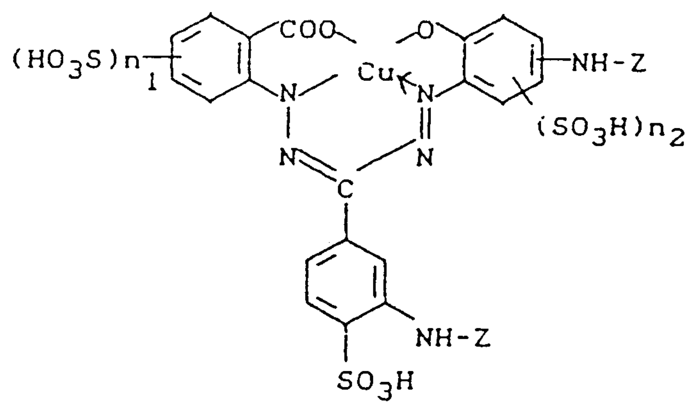

dans laquelle,

$n_1$, $n_2$ valent 0 ou 1, et

Z représente un reste triazinyle

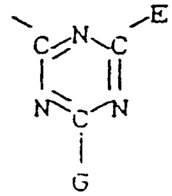

dans laquelle

G représente un atome de chlore ou de fluor, et

E représente un atome de chlore ou un reste ne réagissant pas avec la cellulose tel qu'un groupe amino éventuellement substitué.

**5.** Colorants selon la revendication 1 qui, sous forme de l'acide libre, répondent à la formule

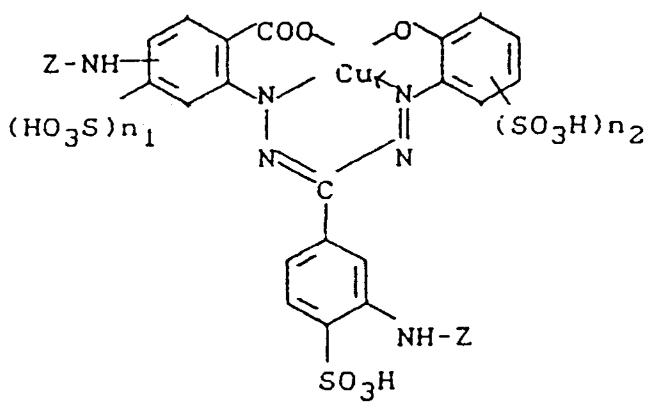

dans laquelle

$n_1$ et $n_2$ valent 0 ou 1 et

Z représente un reste triazinyle de formule

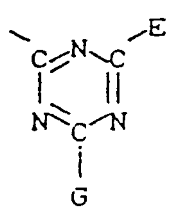

dans laquelle

G représente un atome de chlore ou de fluor et

E représente un atome de chlore ou un reste ne réagissant pas avec la cellulose, tel qu'un groupe amino éventuellement substitué.

**6.** Colorant selon la revendication 1, de formule

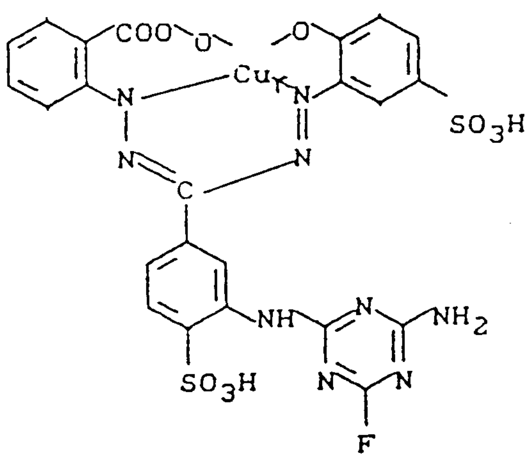

7. Procédé pour préparer des colorants selon la revendication 1, caractérisé en ce qu'on fait réagir des composés de formule

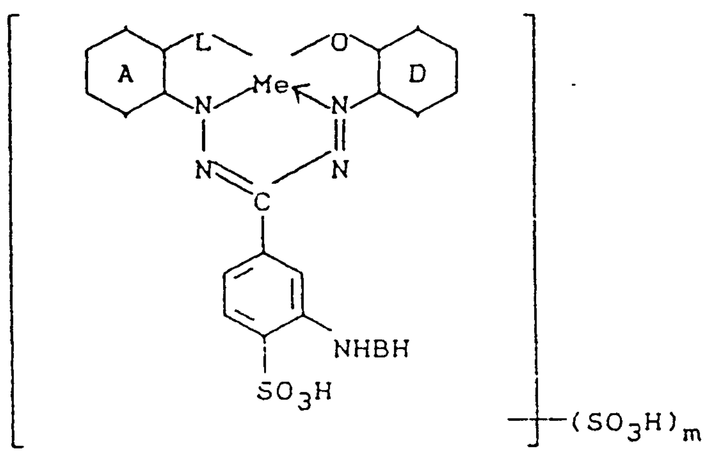

avec un composant réactif et éventuellement avec une amine.

8. Procédé pour teindre et imprimer des matières fibreuses, caractérisé en ce qu'on utilise des colorants selon la revendication 1.